# EUROPÄISCHE PATENTANMELDUNG

(11) **EP 1 849 696 A2**
(43) Veröffentlichungstag der Anmeldung: **31.10.2007**
(21) Anmeldenummer: 07008405.8
(22) Anmeldetag: 25.04.2007
(51) Int. Cl.: B62K 3/00, B62K 21/00

(54) **Fahrzeug nach Art eines Tretrollers**

(30) Priorität: 26.04.2006 DE 202006006692 U
(71) Anmelder: Schrick, Peter, 42899 Remscheid (DE)
(72) Erfinder: Schrick, Peter, 42899 Remscheid (DE)
(74) Vertreter: Priebisch, Rüdiger

(57) **Zusammenfassung**

Um ein Fahrzeug nach Art eines Tretrollers (1) mit mindestens zwei hintereinander angeordneten Rädern (2, 3), von denen zumindest ein Vorderrad (2) mit nur einer Hand lenkbar ist, indem eine über eine Handhabe (16) erzeugte Lenkbewegung über ein nahe dem zu lenkenden Rad (2) angeordnetes Lenkgetriebe (19) zumindest das Vorderrad (2) verschwenkt, sicher und bequem auch über längere Zeit lenken zu können, wird vorgeschlagen, dass die Handhabe (16)
- in Fahrtrichtung (F) neben dem Fahrer (9) angeordnet,
- im Wesentlichen nur in senkrechter Richtung (S1, S2) bewegbar gelagert und
- über einen quer zur Fahrtrichtung (F) verlaufenden Querhebel (14) und ein Gelenk (17) mit einer Lenkstange (18) verbunden ist und

dass etwa in Hüfthöne eines Fahrers (9) ein quer zur Fahrtrichtung (F) verlaufendes Abrtützglied (12) angeordnet ist, das über ein Befestigungsglled (11) am Fahrzeug (1) befestigt ist.

## Beschreibung

Die Erfindung bezieht sich auf ein Fahrzeug nach Art eines Tretrollers mit mindestens zwei hintereinander angeordneten Rädern, von denen zumindest ein Vorderrad oder zumindest ein Vorderrad und ein Hinterrad mit nur einer Hand lenkbar ist, indem eine über eine Handhabe erzeugte Lenkbewegung über ein nahe dem zu lenkenden Rad angeordnetes Lenkgetriebe zumindest ein Rad verschwenkt bzw. über nahe den zu lenkenden Rädern angeordnete Lenkgetriebe zumindest die Räder verschwenkt.

Gattungsgemäße Fahrzeuge, bei denen die Erfindung anwendbar ist, können einspurig, zweispurig oder auch dreispurig sein. Wesentlich ist nur, dass zumindest ein Vorderrad lenkbar sein soll. Die Erfindung findet bei Tretrollern Verwendung, die in vielfältigen Ausführungen bekannt und auch auf dem Markt sind. In einfachster Ausführung, vergleiche zum Beispiel DE 200 19 496 U1, ist das lenkbare Vorderrad üblicherweise in einer um eine nahezu senkrechte, nur etwas zum Fahrer geneigte Achse verdrehbare Vordergabel gelagert, die über ein mit der Vordergabel verbundenes, zwar verdrehbares, aber ansonsten ortsfestes Achsglied und über einen quer zur Fahrtrichtung verlaufenden und handbetätigbaren Lenkhebel, der Lenkstange, in die gewünschte Fahrtrichtung, links oder rechts, verschwenkt werden. Hier ist kein zusätzliches Lenkgetriebe erforderlich, jedoch soll die Lenkstange zum sicheren Verdrehen des Achsglieds mit beiden Händen gehalten und verdreht werden. Die Lenkbewegung besteht hier aus einem Ziehen bzw. Drücken der waagerechten Lenkstange entgegen der bzw. in Fahrtrichtung.

Es sind auch Tretroller mit einer Einhandbedienung bekannt, bei der anstelle einer Lenkstange ein Knauf, ein Ring oder eine kurze Griffstange angeordnet ist, der bzw. die auf ein etwa senkrecht verlaufendes und quer zur Fahrtrichtung verschwenkbares Lenkglied einwirken kann. Zwischen dem Lenkglied und der Vordergabel ist ein Lenkgetriebe in Form eines Hebelgetriebes angeordnet, das die Schwenkbewegung des Lenkglieds über einen Hebel auf eine etwa senkrecht verdrehbare und das Vorderrad umfassende Vordergabel überträgt, um es in die gewünschte Fahrtrichtung zu lenken. Die Lenkbewegung besteht hier aus einem Bewegen des Knaufs oder dergleichen quer zur Fahrtrichtung. Solche Tretroller sind zum Beispiel der DE 20019183 U1, der DE 20018 795 U1 oder der DE 200 17 600 U1 entnehmbar.

Die vorgenannten Einhandlenkungen sind, entgegen der herkömmlichen, erstgenannten Lenkung mit einer zwei endseitige Griffe aufweisenden Lenkstange, genau vor dem Fahrer angebracht, und zwar in der Höhe der Hüfte oder des Bauches. Folglich muß der Fahrer mit der lenkenden Hand den jeweiligen Griff vor den Körper erfassen und verschwenken. Sowohl die Lenkbewegung als auch ein Abstützen des Fahrers mit der lenkenden Hand in Fahrtrichtung wird von dem Fahrer oft als schwierig, unbequem und ermüdend empfunden. Denn der Unterarm erstreckt sich beim Lenken im Wesentlichen quer zur Fahrtrichtung. Hier setzt die Erfindung an.

Ausgehend von den geschilderten Gegebenheiten liegt der Erfindung das Bestreben zugrunde, ein Fahrzeug der gattungsgemäßen Art aufzuzeigen, das sicher und bequem auch über längere Zeit mit nur einer Hand gelenkt werden kann.

Hierzu schlägt die Erfindung die kennzeichnenden Merkmale des Patentanspruchs 1 vor.

Eine dermaßen ausgestaltete Ausbildung und Anordnung ermöglicht eine Einhandlenkung, bei der die lenkende Hand die Handhabe neben dem Rumpf umfasst, sich also wie in passiver Stellung seitlich des Rumpfes befindet. Dabei erstreckt sich der Unterarm zwar leicht schräg, jedoch in Fahrtrichtung und umfasst die Handhabe bequem, weil in natürlicher Stellung. Diese Stellung bewirkt einerseits, dass die von der Hand erzeugten Lenkkräfte gezielt und gut kontrolliert auf die Handhabe aufgebracht werden können. Andererseits kann sich der Fahrer auch schon bequem und sicher an der Handhabe abstützen. Eine weitere Abstützung des Fahrers wird durch das Abstützglied sicher gestellt.

Aus der DE 198 38 181 C2 ist zwar ein einspuriges Tiefliegerad bekannt, bei dem zumindest ein Vorderrad mit nur einer Hand lenkbar ist, indem eine über eine Handhabe in Form eines senkrechten Griffs erzeugte Lenkbewegung über eine nahe dem zu lenkenden Rad angeordnetes Lenkgetriebe das Vorderrad verschwenkt. Dort handelt es sich jedoch nicht um einen Tretroller, bei dem der Fahrer in aller Regel steht, sondern um ein Liegefahrrad, auf dem der Fahrer sich in schräger Rückenlage befindet. Der Fahrer kann sich dort in einfacher Weise vor allem schon über den Sitz und über die Pedale am Fahrzeug nach vorne zu abstützen. Die Lenkbewegung erfolgt durch waagerechte Bewegungen des dort senkrechten Griffs, der sich zudem dort nicht neben dem Rumpf des Fahrers befindet, sondern etwa im Bereich neben dem rechten Knie des ja liegenden Fahrers. Ein Hinweis auf die Lenkanordnung eines Tretrollers ist demnach in keiner Weise zu entnehmen.

Aus der DE 203 19 027 U1 ist zwar ein zweirädriger Tretroller bekannt geworden, bei dem auch das Hinterrad lenkbar ist. Ein Hinweis auf die wesentlichen Merkmale der Erfindung, nämlich auf die kennzeichnenden Merkmale des Patentanspruchs 1, ist jedoch nicht entnehmbar.

Aus der DE 35 06 026 C2 ist ein Sport- und Freizeitfahrzeug, z. B. in Form eines Fahrrads, bekannt geworden, auf dem der Fahrer sich sitzend fortbewegen kann. An seinem Sattel soll vorne eine z. B. achtförmige Handhabe angebracht sein, die senkrecht zu betätigen ist, um über ein entsprechendes Gestänge z. B. ein Vorderrad zu verschwenken; hierbei wird zwangsweise gleichzeitig auch der Sattel verschwenkt. Ein Hinweis auf die Ausbildung der Lenkung eines gattungsgemäßen Fahrzeugs, eines Tretrollers, bei dem der Fahrer eine völlig andersartige Position einnimmt, ist jedoch auch hier nicht entnehmbar.

Vorzugsweise soll die Handhabe zumindest abschnittsweise stangenförmig ausgebildet sein und im Wesentlichen waagerecht und in Fahrtrichtung verlaufen. Insbesondere kann die Handhabe einen Griff, einen Knauf oder einen Ring umfassen.

Die Übertragung der Lenkbewegung von der Handhabe auf das zu lenkende Rad bzw. auf die zu lenkenden Räder kann in unterschiedlicher Weise durchgeführt werden. Hierzu kann insbesondere vorgesehen sein, dass die Handhabe auf eine Lenkstange einwirkt, die in Richtung des Vorderrads verläuft.

Weiterhin kann vorgesehen werden, dass die Lenkgetriebe je eine im Wesentlichen waagerechte Zug-Druck-Stange umfassen, welche die zu lenkenden Räder verschwenkt.

Bei der vorgenannten Ausführung kann der Querhebel sich waagerecht und beiderseits eines Lagers erstrecken und die Handhabe wahlweise links oder rechts am Querhebel lösbar zu befestigen sein.

Dann kann auch vorgesehen werden, dass am Befestigungsglied des Abstützglieds ein ortsfestes Lager für den Querhebel angeordnet ist, das beispielsweise im Wesentlichen als Stange, Platte oder dergleichen ausgebildet sein kann. An dem genannten Befestigungsglied kann schließlich auch ein Gepäckträger angeordnet sein.

Während die vorgenannten Ausführungen sich auf die Lenkung eines einzigen Rades, insbesondere eines Vorderrades, das aber auch als Doppelrad ausgebildet sein kann, beziehen, kann in Weiterführung der Erfindung auch vorgesehen sein, dass die Lenkstange nicht nur auf ein solches Vorderrad, sondern über zwei Getriebe auch auf zumindest ein um eine etwa senkrechte Achse verdrehbar gelagertes Hinterrad einwirkt.

Mit einer derartigen doppelten Lenkung lassen sich mit dem Fahrzeug bequem sehr enge Kurven fahren. Hierzu kann vorgesehen werden, dass die Lenkstange über den Hebel, eine Übertragungsstange, einen Übertragungshebel, eine Übertragungswelle, einen weiteren Übertragungshebel und eine weitere Übertragungsstange auf ein Getriebe einwirkt, das über eine Lenkerstange hinten eine drehbare Hinterradgabel mit dem Hinterrad um die etwa senkrechte Achse im entgegengesetzten Drehsinn zum gelenkten Vorderrad verschwenkt.

Eine besonders einfache konstruktive Gestaltung ist möglich, indem der Querhebel der Lenkung so ausgebildet ist, dass er gleichzeitig als Abstützglied wirken kann. Dann entfällt das separate Abstützglied, da ja seine Funktion vom Querhebel mit übernommen ist.

In der Zeichnung sind drei Ausführungsbeispiele der Erfindung dargestellt, die nun näher beschrieben werden.
Fig. 1 zeigt eine erste Ausführung der Erfindung anhand eines Tretrollers mit einem schematisch dargestellten Fahrer, in Geradeausfahrt und in Seitenansicht.
Fig. 1a zeigt eine Einzelheit in Fig. 1 in vergrößerter Darstellung
Fig. 2 zeigt den Tretroller nach Fig. 1 in der Draufsicht.
Fig. 3 zeigt die Lenkung des Tretrollers nach Fig. 1, von vorne und ohne Fahrer.
Fig. 3a zeigt eine Einzelheit in Fig. 3 in vergrößerter Darstellung.
Fig. 4 zeigt den Tretroller nach Fig. 1 in einer Kurvenfahrt und in Seitenansicht.
Fig. 5 zeigt den Tretroller nach Fig. 4 in der Draufsicht ohne Fahrer.
Fig. 6 zeigt die Lenkung des Tretrollers nach Fig. 4, von hinten und ohne Fahrer.
Fig. 6a zeigt eine Einzelheit in Fig. 6 in vergrößerter Darstellung.
Fig. 7 zeigt eine zweite Ausführung der Erfindung, in ähnlicher Darstellung wie Fig. 1.
Fig. 7a zeigt eine Einzelheit in Fig. 7 in vergrößerter Darstellung.
Fig. 7b zeigt die Einzelheit in Fig. 7a von der anderen Seite.
Fig. 8 zeigt den Tretroller nach Fig. 7 in der Draufsicht.
Fig. 9 zeigt die Lenkung des Tretroller nach Fig. 7, von vorne und ohne Fahrer.
Fig. 9a zeigt eine Einzelheit in Fig. 9 in vergrößerter Darstellung.
Fig. 10 zeigt eine dritte Ausführung der Erfindung, ähnlich der Fig. 1, nach dem Schnitt X - X in Fig. 11.
Fig. 10a zeigt eine Einzelheit im vorderen Bereich der Fig. 10 in vergrößerter Darstellung.

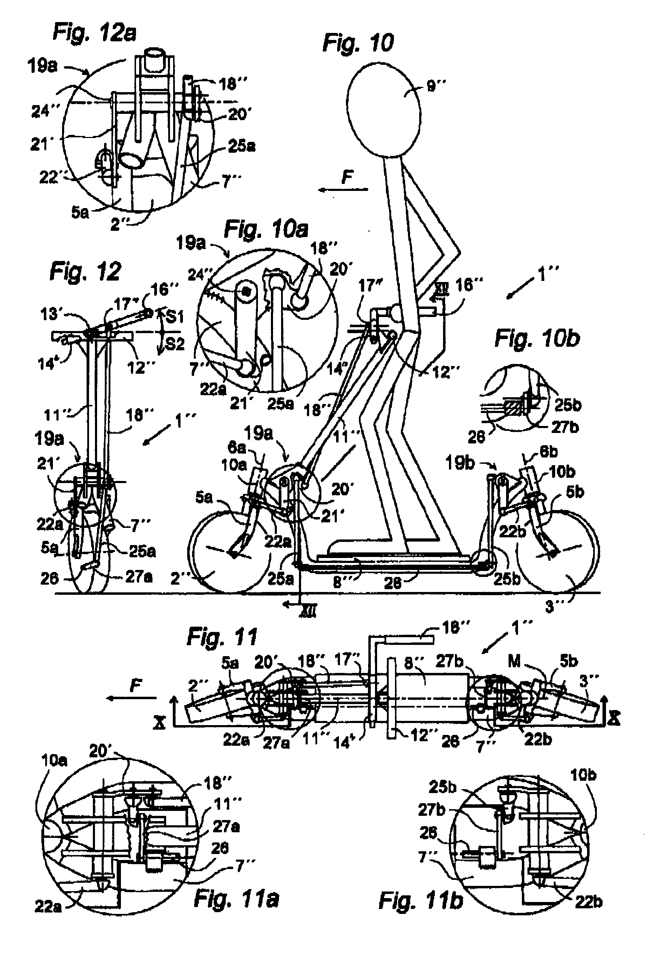

Fig. 10 b zeigt eine Einzelheit im hinteren Bereich der Fig. 10 in vergrößerter Darstellung.
Fig. 11 zeigt den Tretroller nach Fig. 10 in der Draufsicht.
Fig. 11a zeigt eine Einzelheit im vorderen Bereich der Fig. 11 in vergrößerter Darstellung.
Fig. 11b zeigt eine Einzelheit im hinteren Bereich der Fig. 11 in vergrößerter Darstellung.
Fig. 12 zeigt die Lenkung des Tretrollers nach dem Schnitt XII - XII in Fig. 10 und ohne Fahrer.
Fig. 12a zeigt eine Einzelheit in Fig. 12 in vergrößerter Darstellung.

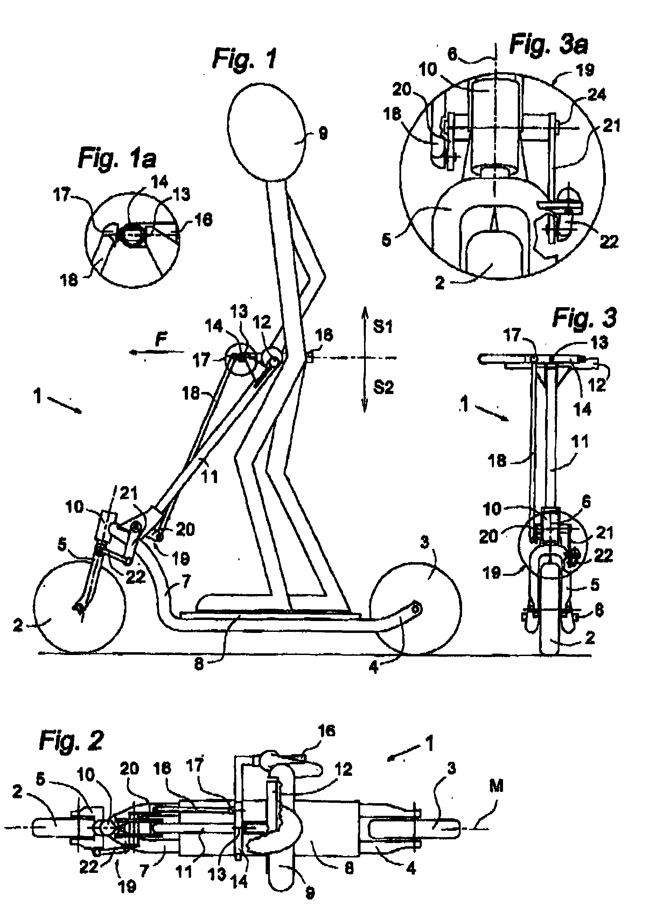

Das Fahrzeug nach Fig. 1 bis Fig. 6a ist ein einspuriger Tretroller 1, der zwei hintereinander in Fahrtrichtung F angeordnete Räder, nämlich ein Vorderrad 2 und ein Hinterrad 3, umfaßt. Das Hinterrad 3 ist in einer starren Gabel 4 , das Vorderrad 2 ist in einer drehbaren Gabel 5 gelagert. Die Räder 2 und 3 können jedoch auch einseitig gelagert sein. Die Gabel 5 ist zur Lenkung des Vorderrads 2 um eine etwa senkrecht verlaufende Achse 6 drehbar gelagert.

Der Tretroller 1 umfaßt weiterhin einen Tragrahmen 7 und ein Trittbrett 8 zum Transport eines angedeuteten Fahrers 9. Der Tragrahmen 7 ist vorne über dem Vorderrad 2 hoch gebogen und endet mit einem Drehlager 10 für die Gabel 5. Hinten bildet das Ende des Tragrahmens 7 die Gabel 4.

An dem Tragrahmen 7 ist nahe dem Drehlager 10 und oberhalb des Vorderrads 2 ein stangenförmiges Befestigungsglied 11 angebracht, beispielsweise angeschweißt. Das Befestigungsglied 11 erstreckt sich von unten her in Richtung der Hüfte des Fahrers 9, bzw. ist in Fahrtrichtung F nach unten geneigt. Das Befestigungsglied 11 endet oben als quer und waagerecht verlaufendes, stangenförmiges Abstützglied 12, das auch plattenförmig ergänzt oder gepolstert ausgebildet sein kann.

An dem Befestigungsglied 11 ist oben, nahe und vor dem Abstützglied 12, ein Lager 13 angebracht, in dem ein zweiarmiger Querhebel 14 drehbar gelagert ist. Der Querhebel 14 ist an einem Ende mit einer Handhabe 16 verbunden, die sich waagerecht und entgegen der Fahrtrichtung F erstreckt. Seitlich neben dem Lager 13 ist am Querhebel 14 ein Drehgelenk 17 angebracht, an dem eine Lenkstange 18 angelenkt ist. Die außermittige Lenkstange 18 schließt sich nach unten zu an den Querhebel 14 an und ist nahe dem unteren Ende des Befestigungsgliedes 11 mit einem auf die Gabel 5 einwirkenden Lenkgetriebe 19 gelenkig verbunden.

Das Lenkgetriebe 19 umfasst einen Hebel 20 und einen Lenker 21, die eine Umlenkung darstellen und eine etwa waagerechte, an der Gabel 5 angelenkte Lenkerstange 22 verschieben und dabei die Gabel 5 mit dem Vorderrad 2 in die gewählte Richtung im Lager 10 um die Achse 6 verschwenken können.

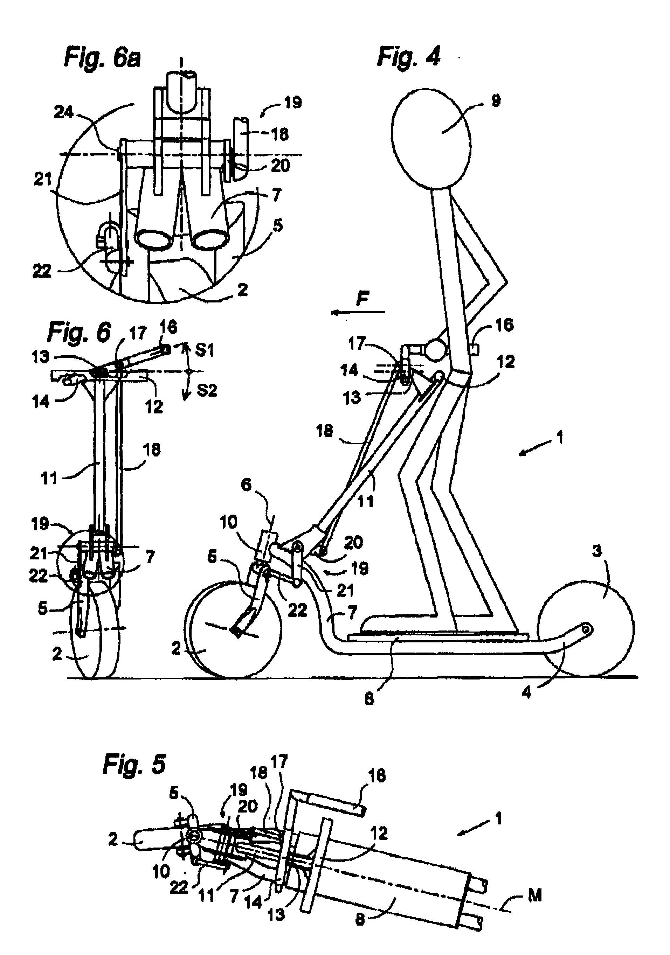

Wie insbesondere aus den Fig. 4 bis 6a deutlich wird, wird beim Anheben der Handhabe 16 in senkrechter Richtung S1 nach oben die Gabel 5 mit dem Vorderrad 2 nach links verschwenkt; hingegen wird beim Drücken der Handhabe 16 in senkrechter Richtung S2 nach unten das Vorderrad 2 nach rechts verschwenkt.

Die dargestellte Anbindung der Handhabe 16 rechts an den Querhebel 14 ist für Rechtshänder gedacht. Für Linkshänder wird die Handhabe 16 links an das andere freie Ende des Querhebels 14 angebracht. Die Anbringung erfolgt vorzugsweise Ober eine schnell lösbare Verbindung, etwa über eine von Hand betätigbare Steck- oder Schraubverbindung.

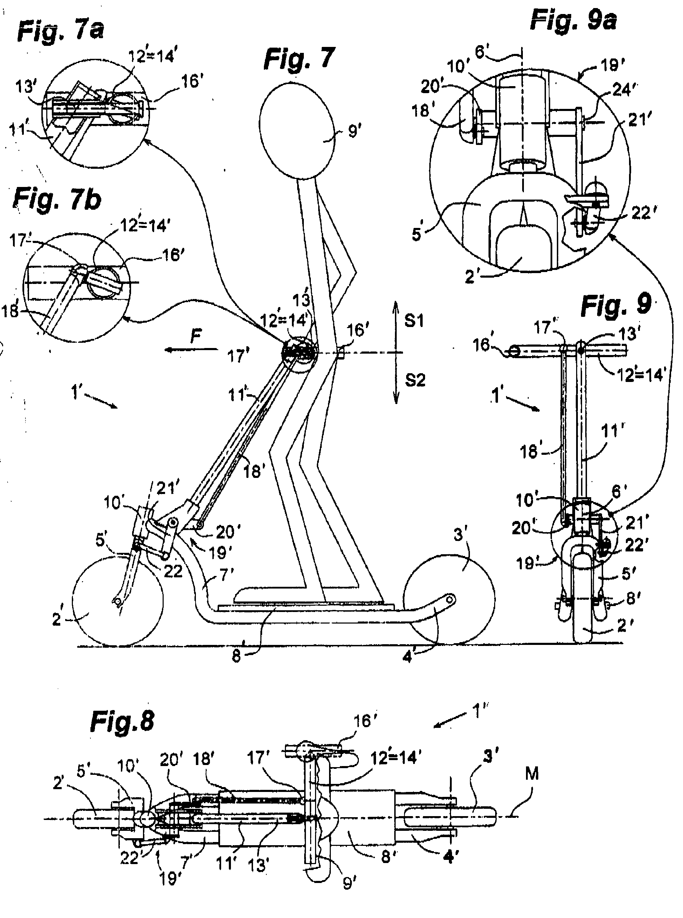

In den Fig. 7 bis 9a ist eine zweite Ausführung der Erfindung dargestellt. Bauteile mit gleicher Funktion sind weitgehend mit gleichem Bezugszeichen wie zur ersten Ausführung, jedoch mit einem Index versehen.

Wahrend der Grundaufbau der beiden Ausführungen gleich ist, unterschelden sie sich jedoch in der Art der Anordnung des Querhebels 14'. Grundsätzlich liegt der Unterschied darin, dass bei der ersten Ausführung nach den Fig. 1 bis 6a eine wesentliche zusätzliche Abstützung über ein separates Abstützglied 12 erfolgt, während diese Abstützung bei der zweiten Ausführung nach den Fig. 7 bis 9a nur von dem Querhebel 12' selbst voll übernommen wird.

Hierzu sind der Querhebel 12' und sein Lager 13' stabiler ausgebildet, so dass der Querhebel 12' waagerechte Abstützkräfte des Fahrers in Hüfthöhe über den Querhebel 12', das Lager 13' und das Befestigungsglied 11' sicher auf den Tretroller 1' übertragen kann. Im übrigen erfolgt die Lenkung wie zur ersten Ausführung schon beschrieben.

Das Fahrzeug 1" nach den Fig. 10 bis 12a entspricht im vorderen Teil weitgehend dem Fahrzeug 1 nach den Fig. 1 bis 6a. Der Unterschied liegt im hinteren Teil des Fahrzeugs 1", denn hier ist statt der starren Gabel 4 eine drehbare Hinterradgabel 5b angeordnet, die über ein Drehlager hinten 10b um eine Achse hinten 6b drehbar ist, um zusammen mit einer drehbaren Vorderradgabel 5a das Fahrzeug 1" zu lenken. Die Gabeln 5a und 5b sind über Übertragungsstangen 25a und 25b und über mit einer Übertragungswelle 26 verdrehsteif verbundenen Übertragungshebel 27a und 27b so miteinander verbunden, dass sie sich zwangsweise gegenläufig verdrehen.

Zur Lenkung des Hinterrads 3" werden die Drehbewegungen des hinteren Hebels 27b, Fig. 11b, über die hintere Übertragungsstange 25b des hinteren Lenkgetriebes 19b und über die hintere Lenkerstange 22b auf die Hinterradgabel 5b übertragen und verdrehen diese mitsamt dem Hinterrad 3" um die Achse 6b des hinteren Drehlagers 10b, Fig. 10. Wegen der im Prinzip spiegelbildlichen Anordnung der Lenkgetriebe 19a und 19b verdreht sich die Hinterradgabel 5b mit dem Hinterrad 3" nach links, wenn sich die Vorderradgabel 5a mit dem Vorderrad 2" nach rechts verdreht, und umgekehrt.

Die Tretroller 1, 1' oder 1", und insbesondere ihre tragenden Teile und Lenkungsteile, können aus einem geeigneten Leichtmetall hergestellt und feste Verbindungen weitgehend durch Schweißen hergestellt sein.

### Bezugszeichenliste:

- 1: Tretroller
- 1': Tretroller
- 1": Tretroller
- 2: Vorderrad
- 2': Vorderrad
- 2": Vorderrad
- 3: Hinterrad
- 3': Hinterrad
- 3": Hinterrad
- 4: starre Gabel
- 4': starre Gabel
- 5: drehbare Gabel
- 5': drehbare Gabel
- 5a: drehbare Vorderradgabel
- 5b: drehbare Hinterradgabel
- 6: Achse
- 6': Achse
- 6a: Achse vorn
- 6b: Achse hinten
- 7: Tragrahmen
- 7': Tragrahmen
- 7": Tragrahmen
- 8: Trittbrett
- 8': Trittbrett
- 8": Trittbrett
- 9: Fahrer
- 9': Fahrer
- 9": Fahrer
- 10: Drehlager
- 10': Drehlager
- 10a: Drehlager vorn
- 10b: Drehlager hinten
- 11: Befestigungsglied
- 11': Befestigungsglied
- 11": Befestigungsglied
- 12: Abstützglied
- 12': Abstützglied
- 12": Abstützglied
- 13: Lager
- 13': Lager
- 13": Lager
- 14: Querhebel
- 14': Querhebel
- 14": Querhebel
- 16: Handhabe
- 16': Handhabe
- 16": Handhabe
- 17: Drehgelenk
- 17': Drehgelenk
- 17": Drehgelenk
- 18: Lenkstange
- 18': Lenkstange
- 18": Lenkstange
- 19: Lenkgetriebe
- 19a: Lenkgetriebe vorn
- 19b: Lenkgetriebe hinten
- 20: Hebel
- 20': Hebel
- 21: Lenker
- 21': Lenker
- 22: Lenkerstange
- 22': Lenkerstange
- 22a: Lenkerstange vorn
- 22b: Lenkerstange hinten
- 24: Verbindungswelle
- 24': Verbindungswelle
- 24": Verbindungswelle
- 25a: Übertragungsstange vorn
- 25b: Übertragungsstange hinten
- 26: Übertragungswelle
- 27a: Übertragungshebel vorn
- 27b: Übertragungshebel hinten
- F: Fahrtrichtung
- M: Mitte
- S1: Richtung nach oben
- S2: Richtung nach unten

## Patentansprüche

1. Fahrzeug nach Art eines Tretrollers (1; 1'; 1") mit mindestens
zwei hintereinander angeordneten Rädern (2, 3; 2', 3'; 2", 3"), von denen zumindest ein Vorderrad (2; 2') oder zumindest ein Vorderrad (2") und ein Hinterrad (3") mit nur einer Hand lenkbar ist, indem eine Ober eine Handhabe (16; 16'; 16") erzeugte Lenkbewegung über ein nahe dem zu lenkenden Rad (2; 2') angeordnetes Lenkgetriebe (19; 19') zumindest ein Rad (2; 2') verschwenkt bzw. über nahe den zu lenkenden Rädern (2", 3") angeordnete Lenkgetriebe (19a, 19b) zumindest die Räder (2", 3") verschwenkt, **dadurch gekennzeichnet,**
**dass** die Handhabe (16; 16'; 16")
- in Fahrtrichtung (F) neben dem Fahrer (9; 9'; 9") angeordnet,
- im Wesentlichen nur in senkrechter Richtung (S1, S2) bewegbar gelagert und
- über einen quer zur Fahrtrichtung (F) verlaufenden Querhebel (14; 14'; 14") und ein Gelenk (17; 17'; 17") mit einer Lenkstange (18; 18'; 18") verbunden ist und
**dass** etwa in Hüfthöhe eines Fahrers (9; 9'; 9") ein quer zur Fahrtrichtung (F) verlaufendes Abstützglied (12; 12'; 12") angeordnet ist, das Ober ein Befestigungsglied (11; 11'; 11") am Fahrzeug (1; 1'; 1") befestigt ist.

2. Fahrzeug nach Anspruch 1, **dadurch gekennzeichnet, dass** die Handhabe (16; 16'; 16")
- zumindest abschnittsweise stangenförmig ausgebildet ist und
- im Wesentlichen waagerecht und in Fahrtrichtung (F) verläuft.

3. Fahrzeug nach Anspruch 1 oder 2, **dadurch gekennzeichnet, dass** die Handhabe einen Griff, einen Knauf oder einen Ring umfasst.

4. Fahrzeug nach einem der Ansprüche 1 bis 3, **dadurch gekennzeichnet, dass** die Handhabe (16; 16'; 16") auf eine Lenkstange (18; 18'; 18") einwirkt, die in Richtung des Vorderrads (2; 2'; 2") verläuft.

5. Fahrzeug nach einem der Ansprüche 1 bis 4, **dadurch gekennzeichnet, dass** die Lenkgetriebe (19; 19'; 19a; 19b) je eine im Wesentlichen waagerechte Zug-Druck-Stange (Lenkerstange 22; 22'; 22a, 22b) umfassen, welche die zu lenkenden Räder (2; 2'; 2", 3") verschwenkt.

6. Fahrzeug nach einem der Ansprüche 1 bis 5, **dadurch gekennzeichnet, dass** der Querhebel (14; 14'; 14") sich waagerecht und beiderseits eines Lagers (13; 13'; 13") erstreckt und die Handhabe (16; 16';16") wahlweise links oder rechts am Querhebel (14; 14'; 14") lösbar zu befestigen ist.

7. Fahrzeug nach einem der Ansprüche 1 bis 6, **dadurch gekennzeichnet, dass** am Befestigungsglied (11; 11'; 11") des Abstützglieds (12; 12") ein ortsfestes Lager (13; 13'; 13") für den Querhebel (14; 14'; 14") angeordnet ist.

8. Fahrzeug nach einem der Ansprüche 1 bis 7, **dadurch gekennzeichnet, dass** das Abstützglied (12; 12'; 12") im Wesentlichen als Stange oder Platte ausgebildet ist.

9. Fahrzeug nach einem der Ansprüche 1 bis 8, **dadurch gekennzeichnet, dass** an dem Befestigungsglied (11; 11'; 11") ein Gepäckträger angeordnet Ist.

10. Fahrzeug nach einem der Ansprüche 1 bis 9, **dadurch gekennzeichnet, dass** die Lenkstange (18") nicht nur auf das Vorderrad (2"), sondern über zwei Getriebe (19a, 19b) auch auf zumindest ein um eine etwa senkrechte Achse (6b) verdrehbar gelagertes Hinterrad (3") einwirkt.

11. Fahrzeug nach Anspruch 10, **dadurch gekennzeichnet, dass** die Lenkstange (18") über das Getriebe (19a), das über einen Hebel (20'), eine Verbindungswelle (24") und einen Lenker (21') verfügt, und die Lenkerstange vorn (22a) die drehbare Vorderradgabel (5a) mit dem Vorderrad (2") um eine etwa senkrechte Achse (6a) verschwenkt.

12. Fahrzeug nach Anspruch 11, **dadurch gekennzeichnet, dass** die Lenkstange (18") über den Hebel (20'), eine Übertragungsstange (25a), einen Übertragungshebel (27a), eine Übertragungswelle (26), einen weiteren Übertragungshebel (27b) und eine weitere Übertragungsstange (25b) auf ein Getriebe (19b) einwirkt, das über eine Lenkerstange hinten (22b) eine drehbare Hinterradgabel (5b) mit dem Hinterrad (3") um die etwa senkrechte Achse (6b) im entgegengesetzten Drehsinn zum gelenkten Vorderrad (2") verschwenkt.

13. Fahrzeug nach einem der Ansprüche 1 bis 12, **dadurch gekennzeichnet, dass** der Querhebel (14') gleichzeitig als Abstützglied (12') dient.
